(19) Europäisches Patentamt
European Patent Office
Office européen des brevets

(11) **EP 2 492 508 B1**

(12) **EUROPÄISCHE PATENTSCHRIFT**

(45) Veröffentlichungstag und Bekanntmachung des Hinweises auf die Patenterteilung:
**11.07.2018 Patentblatt 2018/28**

(51) Int Cl.:
***G01F 15/075*** *(2006.01)*     ***F04B 15/02*** *(2006.01)*
***G01F 3/16*** *(2006.01)*     ***F04B 49/06*** *(2006.01)*
***E04G 21/04*** *(2006.01)*

(21) Anmeldenummer: **12000812.3**

(22) Anmeldetag: **08.02.2012**

(54) **Verfahren zur Bestimmung der Fördermenge eines Flüssigkeitsfördermittels**

Method for determining the flow of a liquid conveyor

Procédé de détermination de la quantité de transport d'un moyen de transport de liquide

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.02.2011 DE 102011012590**

(43) Veröffentlichungstag der Anmeldung:
**29.08.2012 Patentblatt 2012/35**

(73) Patentinhaber: **Liebherr-Werk Nenzing Ges.m.b.H 6710 Nenzing (AT)**

(72) Erfinder:
• **Amann, Martin, Dipl.-Ing.
6820 Frastanz (AT)**

• **Krimbacher, Norbert, Dipl.-Ing. Dr. Techn.
6822 Satteins (AT)**

(74) Vertreter: **Laufhütte, Dieter et al
Lorenz Seidler Gossel
Rechtsanwälte Patentanwälte
Partnerschaft mbB
Widenmayerstraße 23
80538 München (DE)**

(56) Entgegenhaltungen:
**EP-A1- 0 562 398    EP-A1- 1 306 550
DE-A1- 4 035 518    DE-A1-102008 017 961
US-A- 5 997 778**

**Beschreibung**

Die vorliegende Erfindung betrifft ein Verfahren zur Bestimmung der Fördermenge eines Flüssigkeitsfördermittels, insbesondere einer Betonpumpe, ein Flüssigkeitsfördermittel sowie ein Baufahrzeug mit einem Flüssigkeitsfördermittel.

Beim Betrieb einer Betonpumpe auf einer Baustelle ist es notwendig, die geförderte Menge des Betons im wesentlichen umgehend und ohne zeitliche Verzögerung bestimmen zu können. Bei verschiedentlichen Einsatzarten ist die Fördermenge eine relevante Größe und muß erfaßt werden.

Hierzu ist es bislang vorgesehen, daß beispielsweise der Fahrer eines Baufahrzeuges mit einer Betonpumpe, die in der Praxis als Kolbenpumpe ausgebildet ist, die zu fördernde Menge pro Pumpenhub der Betonpumpe vorgibt. Auf der Grundlage dieser Vorgabe sowie der erfolgten Pumpenhübe kann sodann die geförderte Menge des Betons errechnet werden.

Als problematisch erweist sich jedoch, daß die Ermittlung der erfolgten Pumpenhübe nicht ohne weiteres erfolgen kann. Es ist hierzu ein hoher technischer Aufwand notwendig, da eine Detektion der Pumpenhübe beispielsweise direkt an der Pumpe über Endschalter erfolgt. Dies bedingt allerdings z. B. eine aufwendige Kabelanordnung von der Pumpe zu der den Beton verarbeitenden Maschine oder eine andersartige Signalübertragung z. B. über eine Funkstrecke. Die Montage eines Endschalters an den unterschiedlichen Bauformen der Pumpen ist aber insbesondere bei mobilen Betonpumpen problematisch.

Aus der DE 40 35 518 A1 ist ein ein Verfahren zur rechnerischen Bestimmung des Volumenstroms eines von einer Kolbendickstoffpumpe geförderten Förderguts bekannt, bei dem auf Grundlage der Rohsignale des Druckamplitudenverlaufs die Hubfrequenz und mittels einer statistischen Analyse das Fördervolumen der einzelnen Druckhübe ermittelt werden.

Es ist daher die Aufgabe der vorliegenden Erfindung, ein Verfahren der eingangs genannten Art in vorteilhafter Weise weiterzubilden, insbesondere dahingehend, daß eine einfache und sichere Ermittlung der Fördermenge der Flüssigkeit erreicht werden kann.

Diese Aufgabe wird erfindungsgemäß gelöst durch ein Verfahren mit den Merkmalen des Anspruchs 1. Danach ist es vorgesehen, daß bei einem Verfahren zur Bestimmung der Fördermenge eines Flüssigkeitsfördermittels, d. h. mindestens einer Kolbenpumpe, auf der Grundlage von Meßwerten betreffend den Druck der Flüssigkeit im Flüssigkeitsfördermittel durch Hintereinanderschaltung mehrerer Mittelwertfilter mit adaptierender Filterlänge und veränderlichen Detektionsgrenzen die Anzahl der Pumpenhübe des Flüssigkeitsfördermittels rechnerisch ermittelt wird.

Von Vorteil ist bei diesem Verfahren insbesondere, daß die zeitliche Verzögerung im Hinblick auf den Prozess, also der Bestimmung der Fördermenge eines Flüssigkeitsfördermittels gering ist.

Das Flüssigkeitsfördermittel kann insbesondere eine Betonpumpe sein, wobei diese Betonpumpe beispielsweise auf einem Baufahrzeug oder einem sonstigen fahrbaren Untersatz angeordnet sein kann. Derartige Flüssigkeitsfördermittel weisen beispielsweise einen teleskopierbaren oder ausklappbaren Ausleger auf, an dem ein Betonförderschlauch und/oder -rohr bzw. eine Kombination aus einem Betonförderschlauch und einem Betonförderrohr angeordnet ist, mittels dessen der flüssige Beton zum entsprechenden Abladeort auf einer Baustelle gefördert werden kann. Durch die Ermittlung von Meßwerten betreffend den Druck, insbesondere betreffend den Förderdruck kann vorteilhafterweise indirekt, aber genau die Anzahl der Pumpenhübe der als Flüssigkeitsfördermittel dienenden Kolbenpumpe ermittelt werden, wodurch hierüber auf die mittels des Flüssigkeitsfördermittels geförderte Menge an Flüssigkeit geschlossen bzw. diese errechnet werden kann. Es handelt sich also um eine indirekte Fördermengenmessung der Flüssigkeit, die mittels des Flüssigkeitsfördermittels gefördert wird.

Mögliche Methoden zur Meßdatenanalyse wie der Einsatz von Mittelwertfiltern zur Beseitigung von Peaks bzw. zur Generierung von Hilfssignalen, Offsetbeseitigung durch Hochpaßfilterung, diskrete Fouriertransformation, Offsetentfernung durch Signal weniger gemitteltes Signal (Tiefpaß), Zeitableitung (Differenzquotient), Minima- und Maxima-Ermittlung innerhalb eines Rechteckfensters, Hüllkurven, etwa multiplikative Verkleinerung oder Vergrößerung, Kreuzkorrelation oder eine adaptierende Fensterlänge etwa der Form

$$N = \frac{N_{alt} + N_{neu}}{2}$$

ist bei der gegebenen Aufgabenstellung für sich genommen nicht ausreichend geeignet, die Aufgabenstellung zu lösen. Denn bei Flüssigkeitsfördermitteln, die Flüssigkeiten wie Beton über teilweise erhebliche Förderstrecken fördern, kann es vorkommen, daß die ermittelten Meßwerte betreffend den Druck insgesamt ein Signal bzw. Signalbild ergeben, das keine Druckschwankungen erkennen läßt, obwohl definitiv Beton durch das Flüssigkeitsfördermittel gepumpt wird. Erst eine Kombination von Mittelwertbildung und adaptierender Fenster- bzw. Filterlänge und variabler Detektionsgrenzen erlaubt eine Auswertung der Meßwerte betreffend den Druck mit hinreichender Genauigkeit dahingehend, daß die erfolgte Anzahl der Pumpenhübe der Kolbenpumpe und damit die Fördermenge ermittelt werden kann.

Die rechnerische Ermittlung der Anzahl der Pumpenhübe und die hierauf aufbauende Ermittlung der Betonfördermenge anhand der bekannten bzw. vorgegebenen Fördermenge der Flüssigkeit pro Pumpenhub erfolgt somit einfach, genau und derart schnell, so daß die Bestimmung der Fördermenge des Flüssigkeitsfördermittels im wesentlichen ohne zeitliche Verzögerung möglich ist. Beispielsweise erfolgt die rechnerische Ermittlung mittels eines Berechnungsmittels, das beispielsweise Bestandteil der Steuer- und/oder Regelungseinheit des Flüssigkeitsfördermittels sein kann.

Es ist ferner denkbar, daß die Bestimmung der Fördermenge unabhängig vom Gleichanteil des Meßwertes und/oder bei stark verrauschten und/oder gestörten und/oder verschobenen Meßwerten und/oder ohne Vorkenntnis und/oder Einbeziehung der aktuellen Pumpfrequenz des Flüssigkeitsfördermittels erfolgt.

Des weiteren kann vorgesehen sein, daß wenigstens drei Filter vorgesehen sind und/oder daß die Filter Moving-Averages-Filter (MA-Filter) sind, mittels derer eine Auswertung der einzelnen gefilterten Signale erfolgt und die dominante Signalfrequenz in ein Rechtecksignal überführt wird, so daß die Erkennung eines Pumpenhubes des Flüssigkeitsfördermittels in Form einer Flankendetektion erfolgen kann.

Außerdem ist möglich, daß ein wenigstens erster MA-Filter ein Mittelwertfilter über wenigstens fünf Meßwerte zur Beseitigung von Peaks ist und/oder daß neben dem wenigstens einen ersten MA-Filter ein wenigstens zweiter und ein wenigstens dritter MA-Filter vorgesehen ist, wobei der dritte MA-Filter ein Mittelwertfilter ist, dessen Filterlänge abhängig von der Pumpfrequenz des Flüssigkeitsfördermittels ist und der zweite MA-Filter ein Mittelwertfilter ist, dessen Filterlänge halb so lang wie der dritte MA-Filter ist.

Denkbar ist ferner, daß bei der Auswertung der Meßwerte wenigstens eine mittlere Ausblendzeit gebildet wird, wobei die Grenzen für die mittlere Ausblendzeit abhängig von der Pumpfrequenz des Flüssigkeitsfördermittels sind.

Darüber hinaus kann vorgesehen sein, daß eine Distanzzeit vorgesehen ist, die den Zeitraum zwischen zwei aufsteigenden Flanken eines Rechtecksignals beschreibt, wobei erst nach 75 % einer mittleren Distanzzeit und 95 % der Mindestausblendzeit ein Druckanstieg detektiert wird und/oder daß erst nach 75 % der mittleren Ausblendzeit ein Druckabfall detektiert wird. Bei den vorgenannten Werten handelt es sich um ungefähre Werte, die als Anhaltspunkt für die einzustellenden Werte dienen.

Des weiteren betrifft die vorliegende Erfindung ein Flüssigkeitsfördermittel mit den Merkmalen des Anspruchs 7. Danach ist vorgesehen, daß ein Flüssigkeitsfördermittel, welches aus mindestens einer Kolbenpumpe besteht, mit wenigstens einem Mittel zur Bestimmung der Fördermenge des Flüssigkeitsfördermittels versehen ist, wobei auf der Grundlage von Meßwerten betreffend den Druck der Flüssigkeit im Flüssigkeitsfördermittel durch Hintereinanderschaltung mehrerer Mittelwertfilter mit adaptierender Filterlänge und veränderlichen Detektionsgrenzen die Anzahl der Pumpenhübe der als Flüssigkeitsfördermittel verwendeten Kolbenpumpe ermittelbar ist, wobei die Kolbenpumpe wenigstens ein Berechnungsmittel aufweist, welches dazu eingerichtet ist, das Verfahren gemäß einem der Ansprüche 1 bis 6 durchzuführen.

Bei der Durchführung des Verfahrens mittels des Flüssigkeitsfördermittels kann das Flüssigkeitsfördermittel derart beschaffen sein, daß das Verfahren im wesentlichen mittels des Berechnungsmittels des Flüssigkeitsfördermittels durchführbar ist.

Insbesondere kann das Flüssigkeitsfördermittel die vorstehenden, im Zusammenhang mit dem Verfahren zur Bestimmung der Fördermenge des Flüssigkeitsfördermittels beschriebenen Flüssigkeitsfördermittelmerkmale aufweisen.

Außerdem betrifft die vorliegende Erfindung ein Baufahrzeug mit wenigstens einem Flüssigkeitsfördermittel nach Anspruch 7.

Weitere Einzelheiten und Vorteile der vorliegenden Erfindung sollen nun anhand eines in der Zeichnung dargestellten Ausführungsbeispiels näher erläutert werden.

Es zeigen:

Figur 1:     ein Diagramm mit Rohmeßdaten betreffend den Betondruck;

Figur 2:     Diagramme mit Drucksignalen betreffend den Betondruck;

Figur 3:     eine schematische Darstellung der MA-Filter Anordnung;

Figur 4:     ein Diagramm betreffend die Arbeitsweise des ersten MA-Filters;

Figur 5:     ein weiteres Diagramm betreffend Fenster bzw. Filterlängen und Ausblendzeiten;

Figur 6:     eine schematische Gesamtdarstellung des Algorithmus zur Auswertung der erfaßten Meßwerte;

Figur 7:     ein exemplarischer Auszug der Signale nebst Überführung in ein Rechtecksignal.

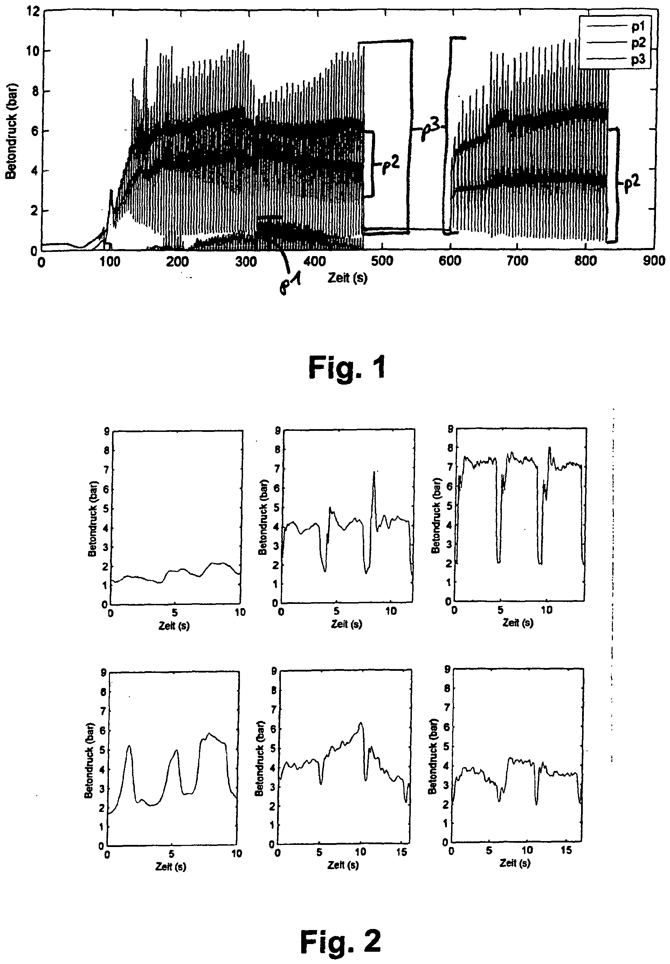

Figur 1 zeigt ein Diagramm mit Rohmeßdaten betreffend den Betondruck, der an unterschiedlichen Stellen des Förderrohres des Flüssigkeitsfördermittel, hier Wert, p1 bzw. des Betonförderschlauches, hier Werte p2 und p3 ermittelt wurde. Erkennbar ist beispielsweise, daß die Druckamplituden ermittelt mit einem Sensor an der Position p2 größer sind als an der Position p1. Weiter sind die Druckamplituden an der Position p3 noch größer als die anderen beiden Druckamplituden an den Positionen p1 und p2. Der Druck ist also im Mittel höher, so daß die Werte nicht abgeschnitten werden. Weiter ist zu bemerken, daß der Druck an Position p3 immer wieder abfällt, während jener an Position p2 erhalten bleibt, was auf die im Betonförderschlauch stehende Betonsäule zurückzuführen ist.

Figur 2 zeigt mehrere Diagramme mit Drucksignalen betreffend den Betondruck, aus denen eine weitere Problematik erkennbar wird, die sich bei der Auswertung der Rohmeßdaten ergibt. So gibt es Peaks im Drucksignal und es ist ferner erkennbar, daß die Pumpenhübe sehr unterschiedlich ausgeführt sind bzw. sehr unterschiedliche Signale hervorrufen. Auch wird erkennbar, daß die Pumpfrequenz variabel sein kann bzw. ist.

Die Rohmeßdaten betreffend den Betondruck werden daher durch Hintereinanderschaltung mehrerer Filter mit adaptierender Filterlänge und veränderlichen Detektionsgrenzen die Anzahl der Pumpenhübe des Flüssigkeitsfördermittels ausgewertet, um hierdurch die Anzahl der Pumpenhübe und basierend hierauf sodann die Fördermenge des mittels des Flüssigkeitsfördermittels geförderten Betons zu ermitteln bzw. zu errechnen.

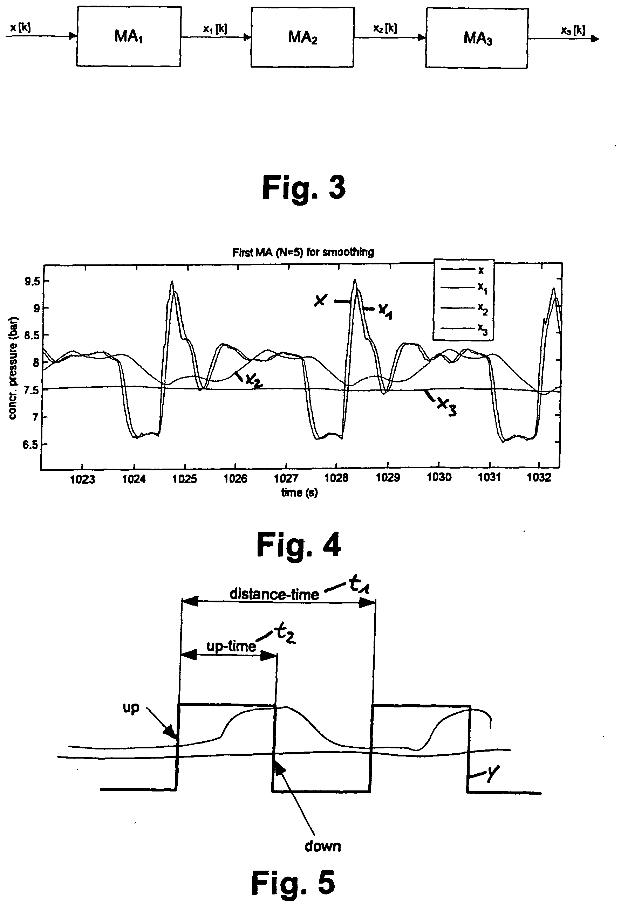

Figur 3 zeigt die Filterkette mit drei MA-Filtern (MA = Moving Averages) $MA_1$, $MA_2$ und $MA_3$. Der erste MA-Filter $MA_1$ ist ein Mittelwertfilter über fünf Punkte zur Beseitigung Peaks im Signals bzw. den Signalen $x_1$, $x_2$, $x_3$, wie dies in Figur 4 anhand eines Diagramms verdeutlicht ist. $MA_2$ und $MA_3$ sind ebenfalls Mittelwertfilter, wobei $MA_3$ eine Filterlänge in Abhängigkeit von der Pumpfrequenz hat und $MA_2$ eine Filterlänge hat, die die Hälfte der Filterlänge von $MA_3$ ist.

Anhand von Figur 5 werden nun die Fenster- bzw. Filterlängen und Ausblendzeiten zur Generierung des Rechtecksignals y erläutert. Es wird hierbei eine mittlere Distanzzeit $t_1$ bzw. eine sogenannte distance-time $t_1$ gebildet, die der Filterlänge von $MA_3$ entspricht. Die Grenzen der mittleren Distanzzeit $t_1$ sind dabei abhängig von der Pumpfrequenz. Ferner wird als Ausblendzeit eine mittlere Up-Zeit $t_2$ bzw. eine sogenannte mittlere up-time $t_2$ gebildet. Die Grenzen für die mittlere Up-Zeit $t_2$ ist dabei abhängig von der Pumpfrequenz. Erst nach ca. 75 % der mittleren Distanzzeit $t_1$ und ca. 95 % der Mindest-Up-Zeit $t_2$ wird ein Druckanstieg detektiert. Weiter wird erst nach 75 % der mittleren Up-Zeit $t_2$ ein Druckabfall detektiert.

Dabei sind auch variable Detektionsgrenzen vorgesehen, da es nicht ausreichend ist, als Grenzen $x_1 > x_2$ bzw. $x_1 < x_3$ zu setzen. Es werden daher Detektionsgrenzen ub und db eingeführt, so daß also gilt

$$x_1 > x_2 + ub$$

bzw.

$$x_1 < x_3 - db.$$

Dabei gilt

$$ub = (x_1 - x_2)/2$$

bei Detektion eines Druckanstieges und

$$db = (x_3 - x_1)/2$$

bei Detektion eines Druckabfalles. Es können minimale bzw. maximale Grenzen für ub und db vorgegeben werden.

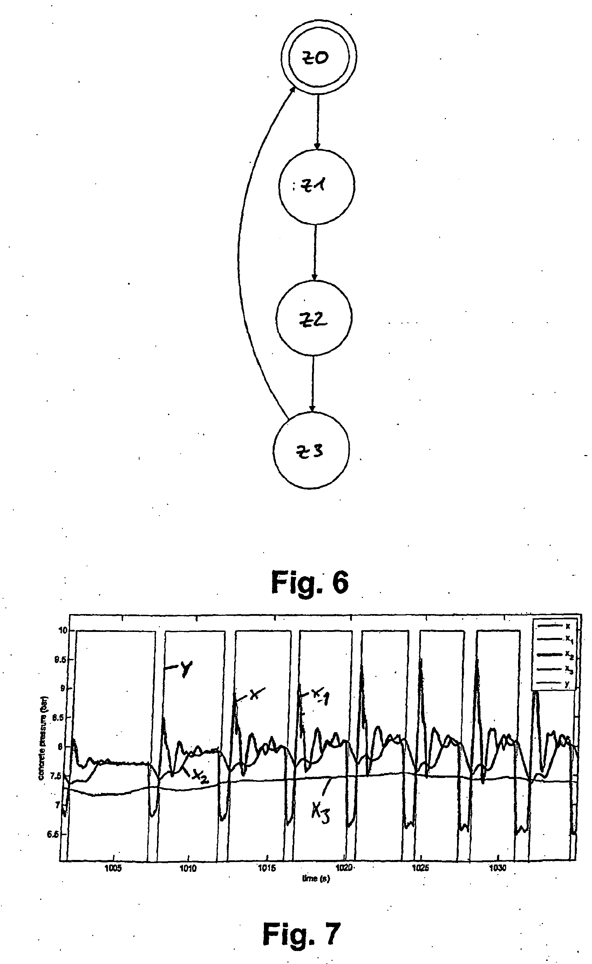

Figur 6 zeigt zusammenfassend eine schematische Gesamtdarstellung des Algorithmus zur Auswertung der erfaßten Meßwerte. Dabei wird im Zustand 0 Z0 gewartet, bis 75 % der mittleren Distanzzeit $t_1$ (vgl. Figur 5) erreicht sind. Im Zustand 1 Z1 erfolgt eine Detektion des Druckanstieges, wobei eine Adaption der mittleren Distanzzeit erfolgt sowie eine Adaption der Fensterlänge für $MA_2$ und $MA_3$. Zudem wird die erste Detektionsgrenze (nach oben) adaptiert und zu Zustand 2 Z2 übergegangen. In Zustand 2 Z2 wird abgewartet, bis 75 % der mittleren Plateauphase, also 75 % der mittleren Up-Zeit $t_2$ (vgl. Figur 5) erreicht sind. Sodann wird zu Zustand 3 Z3 übergegangen. In Zustand 3 Z3 wird der Druckabfall detektiert und es wird der Zähler der Pumpenhübe um eins erhöht, wenn der Pumpenhub als gültig erkannt wurde. Die mittlere Plateauphase wird sodann adaptiert und die zweite Detektionsgrenze wird (nach unten) adaptiert. Sodann wird wieder zu Zustand 0 Z0 übergegangen.

Eine Berechnung der neuen mittleren Werte erfolgt vorteilhafterweise nur, wenn der neue Wert innerhalb einer plausiblen Abweichung liegt. Darüber hinaus ist beispielsweise eine maximale Änderung der berechneten mittleren Werte begrenzt. Ist die Distanz größer als die maximale Distanz, so erfolgt ein Reset des Algorithmus. Ist der mittlere Druck geringer als eine vorgegebene Schwelle, so wird vorzugsweise der Algorithmus deaktiviert. Ferner existiert vorzugsweise eine Prüfungsroutine, die verhindert, daß der Algorithmus auf die doppelte Frequenz adaptiert.

Figur 7 zeigt einen exemplarischen Auszug der Signale $x_1$, $x_2$, $x_3$ und y. Dabei beschreibt das Rechtecksignal y die Pumpenhübe bzw. sind anhand dieses Signals y die erfolgten Pumpenhübe einfach ablesbar. Dieser Auszug der Signale wird durch die in Figur 3 gezeigte Filterkette erhalten und die resultierenden Signalverläufe sind in dem Zeit-Betondruck-Diagramm mit Zeitangabe in Sekunden und Betondruckangabe in bar nach bereits erfolgter Adaption, also wenn mehr oder weniger konstant gepumpt wird, angetragen. Durch die adaptierende Filterlänge der einzelnen MA-Filter (Moving Averages) ist es über die Auswertung der einzelnen gefilterten Signale $x_1$, $x_2$ und $x_3$ - wobei die Signalkurven der Signale x und $x_1$ sich im Wesentlichen im Diagramm überlagern - sehr gut möglich, die dominante Signalfrequenz in ein Rechtecksignal y zu überführen, so daß die Erkennung eines Pumpenhubes in Form einer Flankendetektion erfolgen kann.

## Patentansprüche

1. Verfahren zur Bestimmung der Fördermenge eines Flüssigkeitsfördermittels, insbesondere einer Betonpumpe, wobei das Flüssigkeitsfördermittel aus mindestens einer Kolbenpumpe besteht und wobei auf der Grundlage von Meßwerten betreffend den Druck der Flüssigkeit in der Kolbenpumpe durch Hintereinanderschaltung mehrerer Mittelwertfilter ($MA_1$, $MA_2$, $MA_3$) mit adaptierender Filterlänge und veränderlichen Detektionsgrenzen die Anzahl der Pumpenhübe des Flüssigkeitsfördermittels rechnerisch ermittelt wird.

2. Verfahren nach Anspruch 1, **dadurch gekennzeichnet, daß** die Bestimmung der Fördermenge unabhängig vom Gleichanteil des Meßwertes und/oder bei stark verrauschten und/oder gestörten und/oder verschobenen Meßwerten und/oder ohne Vorkenntnis und/oder Einbeziehung der aktuellen Pumpfrequenz des Flüssigkeitsfördermittels erfolgt.

3. Verfahren Anspruch 1 oder 2, **dadurch gekennzeichnet, daß** wenigstens drei Filter ($MA_1$, $MA_2$, $MA_3$) vorgesehen sind und/oder daß die Filter ($MA_1$, $MA_2$, $MA_3$) Moving-Averages-Filter (MA-Filter) sind, mittels derer eine Auswertung der einzelnen gefilterten Signale ($x_1$, $x_2$, $x_3$) erfolgt und die dominante Signalfrequenz in ein Rechtecksignal ($y$) überführt wird, so daß die Erkennung eines Pumpenhubes des Flüssigkeitsfördermittels in Form einer Flankendetektion erfolgen kann.

4. Verfahren nach Anspruch 3, **dadurch gekennzeichnet, daß** ein wenigstens erster MA-Filter ($MA_1$) ein Mittelwertfilter über wenigstens fünf Meßwerte zur Beseitigung von Peaks ist und/oder daß neben dem wenigstens einen ersten MA-Filter ($MA_1$) ein wenigstens zweiter und ein wenigstens dritter MA-Filter ($MA_2$, $MA_3$) vorgesehen ist, wobei der dritte MA-Filter ($MA_3$) ein Mittelwertfilter ist, dessen Filterlänge abhängig von der Pumpfrequenz der Kolbenpumpe ist und der zweite MA-Filter ($MA_2$) ein Mittelwertfilter ist, dessen Filterlänge halb so lang wie der dritte MA-Filter ($MA_3$) ist.

5. Verfahren nach einem der vorhergehenden Ansprüche, **dadurch gekennzeichnet, daß** bei der Auswertung der Meßwerte wenigstens eine mittlere Ausblendzeit ($t_2$) gebildet wird, wobei die Grenzen für die mittlere Ausblendzeit ($t_2$) abhängig von der Pumpfrequenz der Kolbenpumpe sind.

6. Verfahren nach Anspruch 4, **dadurch gekennzeichnet, daß** eine Distanzzeit ($t_1$) vorgesehen ist, die den Zeitraum zwischen zwei aufsteigenden Flanken eines Rechtecksignals ($y$) beschreibt, wobei erst nach 75 % einer mittleren Distanzzeit ($t_1$) und 95 % der Mindestausblendzeit ($t_2$) ein Druckanstieg detektiert wird und/oder daß erst nach 75 % der mittleren Ausblendzeit ($t_2$) ein Druckabfall detektiert wird.

7. Flüssigkeitsfördermittel, insbesondere zur Förderung von Beton, wobei das Flüssigkeitsfördermittel aus mindestens einer Kolbenpumpe besteht, mit wenigstens einem Mittel zur Bestimmung der Fördermenge des Flüssigkeitsfördermittels, wobei auf der Grundlage von Meßwerten betreffend den Druck der Flüssigkeit im Flüssigkeitsfördermittel durch Hintereinanderschaltung mehrerer Mittelwertfilter ($MA_1$, $MA_2$, $MA_3$) mit adaptierender Filterlänge und veränderlichen Detektionsgrenzen die Anzahl der Pumpenhübe der als Flüssigkeitsfördermittels verwendeten Kolbenpumpe ermittelbar ist, wobei die Kolbenpumpe wenigstens ein Berechnungsmittel aufweist, welches dazu eingerichtet ist, das Verfahren gemäß einem der Ansprüche 1 bis 6 durchzuführen.

8. Baufahrzeug mit wenigstens einem Flüssigkeitsfördermittel nach Anspruch 7.

## Claims

1. A method for determining the delivery rate of a liquid conveying means, in particular of a concrete pump, wherein the liquid conveying means consists of at least one piston pump and wherein the number of the pump strokes of the liquid conveying means is determined mathematically on the basis of measured values concerning the pressure of the liquid in the piston pump, by sequentially connecting a plurality of mean value filters ($MA_1$, $MA_2$, $MA_3$) with adaptive filter length and variable detection limits.

2. The method according to claim 1, **characterized in that** the determination of the delivery rate occurs independently of the DC component of the measured value and/or with highly noisy and/or disturbed and/or shifted measured values and/or without prior knowledge of and/or considering the current pump frequency of the liquid conveying means.

3. The method according to claim 1 or 2, **characterized in that** at least three filters ($MA_1$, $MA_2$, $MA_3$) are provided and/or that the filters ($MA_1$, $MA_2$, $MA_3$) are moving-average filters (MA filters), by means of which an evaluation of the individual filtered signals ($x_1$, $x_2$, $x_3$) is effected and the dominant signal frequency is transformed into a square-wave signal ($y$), so that recognizing a pump stroke of the liquid conveying means can be effected in the form of an edge detection.

4. The method according to claim 3, **characterized in**

**that** at least a first MA filter (MA$_1$) is a mean-value filter over at least five measured values for eliminating peaks and/or that besides the at least one first MA filter (MA$_1$) at least a second or a third MA filter (MA$_2$, MA$_3$) is provided, wherein the third MA filter (MA$_3$) is a mean-value filter, the filtering length of which depends on the pump frequency of the piston pump and the second MA filter (MA$_2$) is a mean-value filter, the filtering length of which is half of that of the third MA filter (MA$_3$).

5. The method according to one of the preceding claims, **characterized in that** in the evaluation of the measured values, at least one mean fade-out time (t$_2$) is formed, wherein the limits for the average fade-out time (t$_2$) are dependent on the pump frequency of the piston pump.

6. The method according to claim 4, **characterized in that** a distance time (t1) is provided, which describes the time period between two rising edges of a square-wave signal (y), wherein only after 75% of a mean distance time (t$_1$) and 95 % of the minimum fade-out time (t$_2$) a rise in pressure is detected and/or that only after 75 % of the average fade-out time (t$_2$) a drop in pressure is detected.

7. A liquid conveying means, in particular for delivering concrete, wherein the liquid conveying means consists of at least one piston pump, with at least one means for determining the delivery rate of the liquid conveying means, wherein on the basis of measured values concerning the pressure of the liquid in the liquid conveying means the number of the pump strokes of the piston pump used as liquid conveying means can be determined by sequentially connecting multiple mean-value filters (MA$_1$, MA$_2$, MA$_3$) with adaptive filter length and variable detection limits, wherein the piston pump comprises at least one calculation means configured to perform the method according to one of claims 1 to 6.

8. A construction vehicle having at least one liquid conveying means according to claim 7.

**Revendications**

1. Procédé de détermination de la quantité de transport d'un moyen de transport de liquide, en particulier d'une pompe à béton, ledit moyen de transport de liquide étant constitué d'au moins une pompe à piston, et le nombre de courses de la pompe du moyen de transport de liquide étant déterminé par calcul sur la base de valeurs mesurées concernant la pression du fluide dans la pompe à piston par le raccordement en série de plusieurs filtres de valeur moyenne (MA$_1$, MA$_2$, MA$_3$) avec une longueur de filtre adaptative et des limites de détection variables.

2. Procédé selon la revendication 1, **caractérisé en ce que** la détermination de la quantité de transport se fait indépendamment de la composante de courant continu de la valeur mesurée et/ou avec des valeurs mesurées très brouillées et/ou perturbées et/ou décalées et/ou sans connaissance préalable et/ou prise en compte de la fréquence de pompage actuelle du moyen de transport de liquide.

3. Procédé selon la revendication 1 ou 2, **caractérisé en ce qu'**au moins trois filtres (MA$_1$, MA$_2$, MA$_3$) sont prévus et/ou **en ce que** les filtres (MA$_1$, MA$_2$, MA$_3$) sont des filtres à moyenne mobile (filtres MA), à l'aide desquels une évaluation de chacun des signaux filtrés (x$_1$, x$_2$, x$_3$) a lieu et **en ce que** la fréquence dominante du signal est transformée en un signal rectangulaire (y), de sorte que la détection d'une course de la pompe du moyen de transport de liquide peut s'effectuer sous forme d'une détection de flanc.

4. Procédé selon la revendication 3, **caractérisé en ce qu'**au moins un premier filtre MA (MA$_1$) est un filtre de valeur moyenne sur au moins cinq valeurs mesurées pour l'élimination de crêtes et/ou **en ce qu'**au moins un deuxième et au moins un troisième filtre MA (MA$_2$, MA$_3$) sont prévus en plus de l'au moins un premier filtre MA (MA$_1$), le troisième filtre MA (MA$_3$) étant un filtre de valeur moyenne dont la longueur de filtre dépend de la fréquence de pompage de la pompe à piston et le deuxième filtre MA (MA$_2$) étant un filtre de valeur moyenne dont la longueur de filtre est moitié moins longue que le troisième filtre MA (MA$_3$).

5. Procédé selon l'une quelconque des revendications précédentes, **caractérisé en ce qu'**au cours de l'évaluation des valeurs mesurées, au moins un délai de transition moyen (t$_2$) est formé, les limites pour le délai de fondu (t$_2$) dépendant de la fréquence de pompage de la pompe à piston.

6. Procédé selon la revendication 4, **caractérisé en ce qu'**un temps de distance (t$_1$) est prévu qui décrit la durée temporelle entre deux flancs ascendants d'un signal rectangulaire (y), une hausse de la pression n'étant toutefois détectée qu'après 75 % d'un temps de distance moyen (t$_1$) et 95 % du délai de transition minimum (t$_2$) et/ou une baisse de la pression étant détectée seulement après 75 % du délai de transition moyen (t$_2$).

7. Moyen de transport de liquide, en particulier pour le transport de béton, ledit moyen de transport de liquide étant constitué d'au moins une pompe à piston, avec au moins un moyen de détermination de la quantité de transport du moyen de transport de liquide, dans lequel le nombre de courses de la pompe à piston utilisée comme moyen de transport de liquide pouvant être déterminé sur la base de valeurs mesurées relatives à la pression du fluide dans le moyen de transport de liquide par le raccordement en série de plusieurs filtres de valeur moyenne ($MA_1$, $MA_2$, $MA_3$) avec une longueur de filtre adaptative et des limites de détection variables, la pompe à piston présentant au moins un moyen de calcul qui est configuré pour réaliser le procédé selon l'une des quelconques revendications 1 à 6.

8. Véhicule de chantier avec au moins un moyen de transport de liquide selon la revendication 7.

# Fig. 1

# Fig. 2

**Fig. 3**

**Fig. 4**

**Fig. 5**

**Fig. 6**

**Fig. 7**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4035518 A1